Europäisches Patentamt

(19) European Patent Office

Office européen des brevets

(11) Publication number : 0 461 887 A1

# (12) EUROPEAN PATENT APPLICATION

(21) Application number : 91305322.9

(51) Int. Cl.⁵ : C08J 5/12

(22) Date of filing : 12.06.91

(30) Priority : 14.06.90 US 538268

(43) Date of publication of application :
18.12.91 Bulletin 91/51

(84) Designated Contracting States :
DE ES FR GB IT

(71) Applicant : SCHLEGEL CORPORATION
1555 Jefferson Road, P.O. Box 23197
Rochester New York 14692-3197 (US)

(72) Inventor : Bush, Thomas F.
1732 Scenic Drive
Blount, Tennessee 37801 (US)
Inventor : Jackson, Winton
Route No.1, Box 322
Blount, Tennessee 37777 (US)

(74) Representative : Carpmael, John William
Maurice et al
CARPMAELS & RANSFORD 43 Bloomsbury
Square
London, WC1A 2RA (GB)

(54) Bonding of extruded rubber with plastic.

(57) A moldable elastomeric material for cold bonding to an EPDM member comprises a mixture of between 70% and 90% of thermoplastic olefin, and between about 10% and 30% of polyethylene. A method for forming a weatherstrip includes the steps of extruding an EPDM rubber weatherstrip element ; forming an activating bonding surface on said extruded weatherstrip element ; bonding a thermoplastic element comprising between 70% and 90% of thermoplastic olefin and between about 10% and 30% of polyethylene to said activated surface at a temperature below the softening point of the EPDM member.

EP 0 461 887 A1

FIG.7

This invention relates in general to a bonded plastic-rubber composite, and more particularly to a bonded composite of EPDM rubber with a molded thermoplastic olefin/polyethylene mixture, which composite can be formed without heating the EPDM rubber member.

It is desirable to form composite articles having an elongated portion of the type preferably formed by extrusion tenaciously bonded to a molded element. Weatherseal assemblies, and more particularly vehicle weatherseal assemblies, are an example of such articles. A weatherseal for an automobile door may include a plurality of elongated elements that are preferably extruded in an continuous process to reduce cost. The extruded elements are cut to the required length and connected at the corners of the door by preferably molded corners. Typically, the extruded elements are formed from ethylene/propylene/diene/monomer (EPDM) rubber. Often, the EPDM rubber elements are coated with a slip coat or pile friction reducing layer to form a glassrun channel. Slip coats of polypropylene, santoprene, or nylon are often used for this purpose.

The molded corners that connect the elongated elements can be formed from the same material used to form the extruded portions of the weatherseal. However, molded EPDM rubber corners must be formed under relatively high temperature high pressure conditions to cure the rubber, and form a satisfactory bond with the ends of the extruded elements. Typically, molding a rubber corner takes three to five minutes. Exposing the previously extruded and coated elongated EPDM elements to rubber molding temperatures for this long damages the friction reducing coatings and renders the assembly unusable.

U.S. Patent No. 4,652,475 describes a precompounded formaldehyde donor/acceptor system for adhesively bonding various types of thermoplastic and elastomeric materials under heat and pressure. Yardley U.S. Patent No. 4,537,825 describes a bonded composite of an EPDM article having less than 50% rubber with a thermoplastic elastomeric blend of EPDM particles dispersed in a thermoplastic linear crystalline polyolefin continuous phase. The process does not require an adhesive interlayer, but is carried out at elevated pressure and requires mixing rubber with the plastic. Door or window sealing strip applications are mentioned in this patent.

It is an object of this invention to provide a bonded composite of an EPDM rubber element with a plastic element that can be molded at low temperature. More specifically, it is an object of this invention to provide a moldable plastic material that can be bonded to a surface of an extruded EPDM rubber element, without the application of heat, so as to leave undamaged any friction reducing coating or layer of material bonded to the extruded element.

Briefly stated, and in accordance with one aspect of the invention, a moldable elastomeric material for cold bonding to an EPDM member comprises a mixture of between 70% and 90% of thermoplastic olefin, and between about 10% and 30% of polyethylene.

In accordance with another aspect of this invention, a method for forming a weatherstrip includes the steps of extruding an EPDM rubber weatherstrip element; forming an activating bonding surface on said extruded weatherstrip element; bonding a thermoplastic element comprising between 70% and 90% of thermoplastic olefin and between about 10% and 30% of polyethylene to said activated surface at a temperature below the softening point of the EPDM member.

While the novel aspects of the invention are set forth with particularity in the appended claims, the invention itself together with further objects and advantages thereof may be more readily comprehended by reference to the following detailed description of a presently preferred embodiment of the invention, taken in conjunction with the accompanying drawings, in which:

Figure 1 is a front elevation of a first EPDM rubber weatherseal element;

Figure 2 is a section taken along lines 2-2 of Figure 1;

Figure 3 is a front elevation of a second extruded EPDM weatherseal element;

Figure 4 is a section taken along lines 4-4 of Figure 3;

Figure 5 is a front elevation of the weatherseal elements of Figures 1 and 3 inserted into a mold for formation and bonding of a plastic corner element;

Figure 6 is a top plan view of the two weatherseal elements and mold shown in Figure 5;

Figure 7 is a front elevation as in Figure 5 showing plastic molding compound injected into the mold;

Figure 8 is a top plan view of a completed bonded plastic-rubber extruded composite in accordance with this invention; and

Figure 9 is a front elevation thereof.

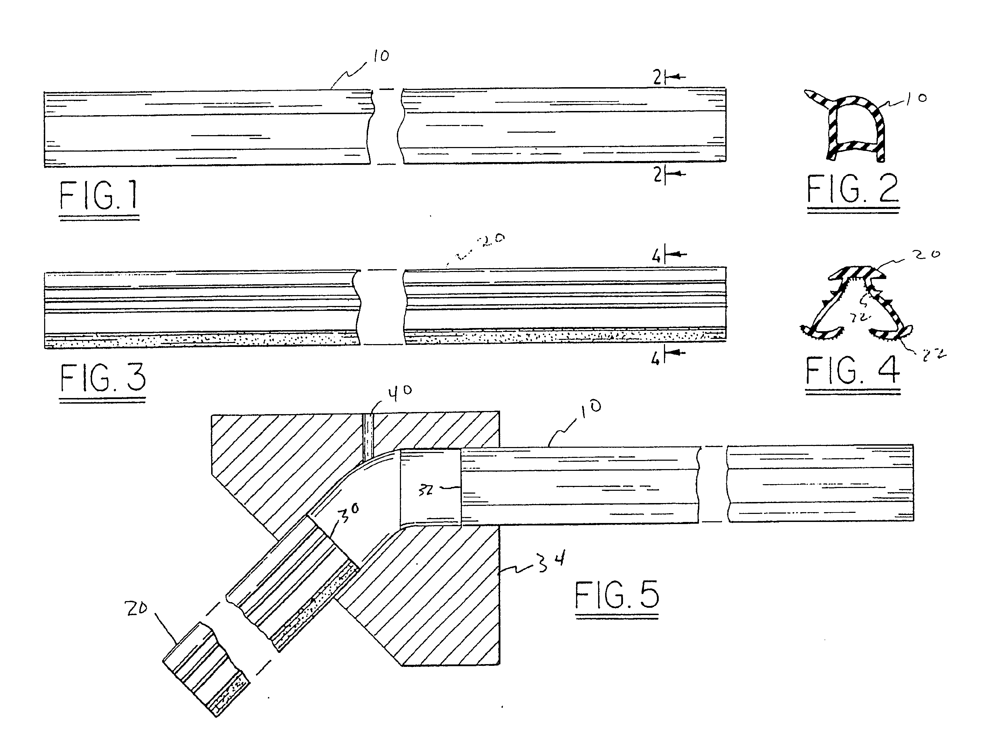

Figures 1 through 4 show two extruded rubber weatherstrip elements of the type that are connected by a molded plastic corner in accordance with the method and apparatus of this invention. A first weatherseal 10 and a second weatherseal 20 form different portions of a weatherseal assembly for a vehicle door and/or window or the like. As can be seen in the sections of Figures 2 and 4, weatherseal 10 is a molding weatherseal, while weatherseal 4 is a window channel and is provided with a friction reducing flocked coating 22 on various surfaces, to allow a window to slidably engage the channel with a minimum of friction. Weatherseals 10 and 20, including the friction reducing coating on weatherseal 20, are *per se* conventional.

Preferably, the weatherseals are formed from EPDM rubber by extrusion in a continuous process at a suitable extrusion temperature, and subsequently cut to the required lengths to form a weatherseal assembly.

The EPDM rubber is usually in non-particulate form and must be in the vulcanized state (that is cross linked and non-thermoplastic) prior to formation of the corner. The EPDM rubber may be in combination with one or more other rubbers, preferably such that the total volume of EPDM is more than 50% of the total rubber present.

The term "rubber" or "ethylene-propylene rubber" as used in this specification and claims shall, unless specifically differentiated otherwise, always refer to thermosetting elastomers based on ethylene and propylene monomers. The International Institute of Synthetic Rubber Producers (IISRP) classifications for these ethylene-propylene rubbers are:

1. EPDM-terpolymer ethylene, propylene, and a diene with residual unsaturated portion of the diene in the side chain.

2. EPM-copolymers of ethylene and propylene.

Any elastomers classified as EPDM or EPM by IISRP are specifically included within the scope of this invention.

The surface of the EPDM rubber element to which the plastic molded corner is to be bonded must be an activated surface. The surface is and will remain activated for up to about 72 hours after cutting. Once the activation energy of the surface has decreased, it may be reactivated by either recutting or by other methods known to those skilled in the art.

The preferred composition for the plastics material used in this invention varies with the characteristics of the EPDM rubber. As will be discussed in more detail below, the harder the EPDM part, the higher concentration of polythelene is needed in the plastic mixture. The hardness of the EPDM number may be measured by any convenient means, for example the durometer may be determined.

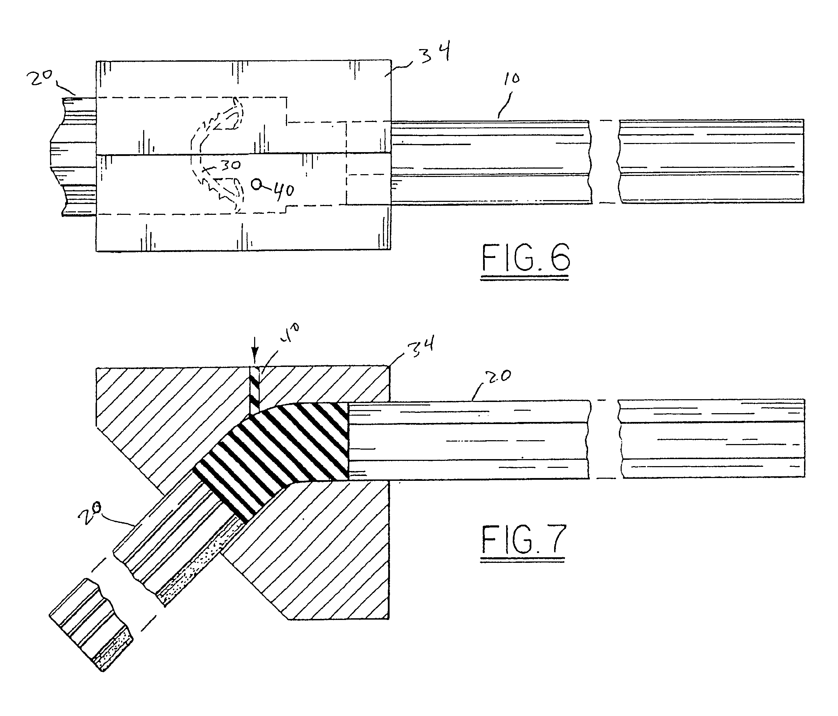

Formation of the bonded extruded rubber-plastic corner portion of a weatherseal in accordance with this invention is illustrated in Figure 5. The activated ends 30 and 32 of weatherseal elements 10 and 20 are inserted into an unheated cavity mold 34, only one half of which is shown in Figures 5 and 7. By utilizing an unheated mold, the flocking 22 on element 20 is not damaged during the molding process. An opening 40 receives a charge of thermoplastic material from a plastic injecting molding machine for forming the corner element. Preferably, the thermoplastic material is a mixture of thermoplastic olefin, and polyethylene in ratio of from about 70-90% olefin, and 10-30% polyethylene. The mixture is heated to be at least its melting point in the barrel and nozzle of the injector. The injecting molding process is not novel *per se*. A view of mold 34 with a charge of thermoplastic material injected therein is shown in Figure 7.,

A number of commercially available polyolefin hydrocarbons and polyethylene materials have been found to be useful in forming a plastic membrane in accordance with this invention. Among the earliest of these to be used was a 30/70 ratio mixture of Dowlex 200, a linear low density polyethylene, and Exxon TPO 149, a polyolefin hydrocarbon. This mixture formed plastic corners that were judged somewhat harder than optimum, but demonstrates the feasibility of the invention.

Other mixtures and materials have also been found to form satisfactory molded plastic corners. Among these are:

1. 70% Santoprene 101-55 and 30% TPO 149.
2. 70% Santoprene 101-55 and Exxon LDX 205.
3. 80% Elvax 100 (Ethylene Vinyl Acetate) LDX 205.
4. Santoprene 73A and red experimental thermoplastic elastomer from Exxon - 70/30 ratio.
5. 70% Trefsin MDE-882-60A.03 and 30% TPO 149.
6. 70% Trefsin MDE-553-55A and 30% TPO 149.
7. 80% Shell TPE RP6537 and 20% Dowlex 200.
8. 80% Shell TPE RP6540 and 20% TPO 149.
9. 80% Shell Elexar 8431 and 20% TPO 149.
10. 80% Shell G7705 and 20% TPO 149.

None of the elastomers listed in examples 5 through 10 will adhere to the cold EPDM rubber when used in 100% concentrations, and neither flame treatment nor any known primer will facilitate adherence. Only when an adhesion forming amount of the material is replaced with a polyolefin does a satisfactory bond result.

While all of the above mixtures provide a satisfactory molded composite, all are somewhat harder than is desired. The compositions described in the following three examples provide a softer material, useful in a practical weatherseal application.

Example 1:

A mixture of 85% Shell RP6535 thermoplastic elastomer and 15% Exxon TPO 149 polyolefin was molded at room temperature for 24 seconds from Gluco model VS/20-TP plastic injection molding machine with a top barrel heater having a temperature of 425°F, a bottom barrel heater having a temperature of 435°F, and an injection nozzle having a temperature of 450°F. The mold was filled in 6 seconds of injection time and was cooled for 18 seconds before opening. A shot size of 9 grams was used.

Example 2:

A mixture of 80% Shell RP6536 thermoplasltic elastomer and 20% Exxon TPO 149 polyolefin was molded at room temperature for 25 seconds from the same machine as in Example 1 with a top barrel heater having a temperature of 435°F, a bottom barrel heater having a temperature of 450°F, and an injection nozzle having a temperature of 450°F. The mold was filled in 7 seconds of injection time and was cooled for 18 seconds before opening. A shot size of 27 grams was used.

Example 3:

A mixture of 80% Shell RP6536 thermoplastic elastomer and 20% Exxon TPO 149 polyolefin was molded at room temperature for 20 seconds from the same machine as in examples 1 and 2 at a top barrel heater having a temperature of 400°F, a bottom barrel heater having a temperature of 425°F, and an injection nozzle having a temperature of 435°F. The mold was filled in 5 seconds of injection time and was cooled for 15 seconds before opening. A shot size of 50 grams was used.

It must be emphasized that the above examples are illustrative only. Successful molded corners have been formed within the following limits and even wider variations may also be expected to produce useful results:

Top barrel temperature 375-400°F
Bottom barrel temperature 400-450°F
Injection nozzle temperature 335-475°F
Injection time 4-10 seconds
Cooling time 12-30 seconds
Shot size 3-50 grams

Example 4:

A mixture of 85% Shell RP6536 thermoplastic elastomer with 15% TPO 149 olefin produces a soft corner with moderately good adhesion.

The only requirement on the EPDM rubber is that the end cut to be bonded should present an activated surface, preferably a surface aged not more than 72 hours after cutting.

Six samples of composite articles formed in accordance with Example 4 were tested for splice strength, with the following results:

| Sample Nos. | Splice Strength (Newtons) |
|---|---|
| 1 | 115 |
| 2 | 98 |
| 3 | 140 |
| 4 | 104 |
| 5 | 84 |
| 6 | 129 |

Example 5:

Utilizing an identical mold as used in Example 4, and mixing 70% RP6536 with 30% TPO 149 produces a slightly harder corner, but with much better adhesion:

| Samples Nos. | Splice Strength (Newtons) |
|---|---|
| 1 | 239.25 |
| 2 | 289.32 |
| 3 | 177.40 |
| 4 | 271.91 |
| 5 | 248.20 |
| 6 | 224.49 |
| 7 | 263.45 |
| 8 | 238.42 |
| 9 | 181.71 |
| 10 | 218.85 |
| 11 | 252.18 |

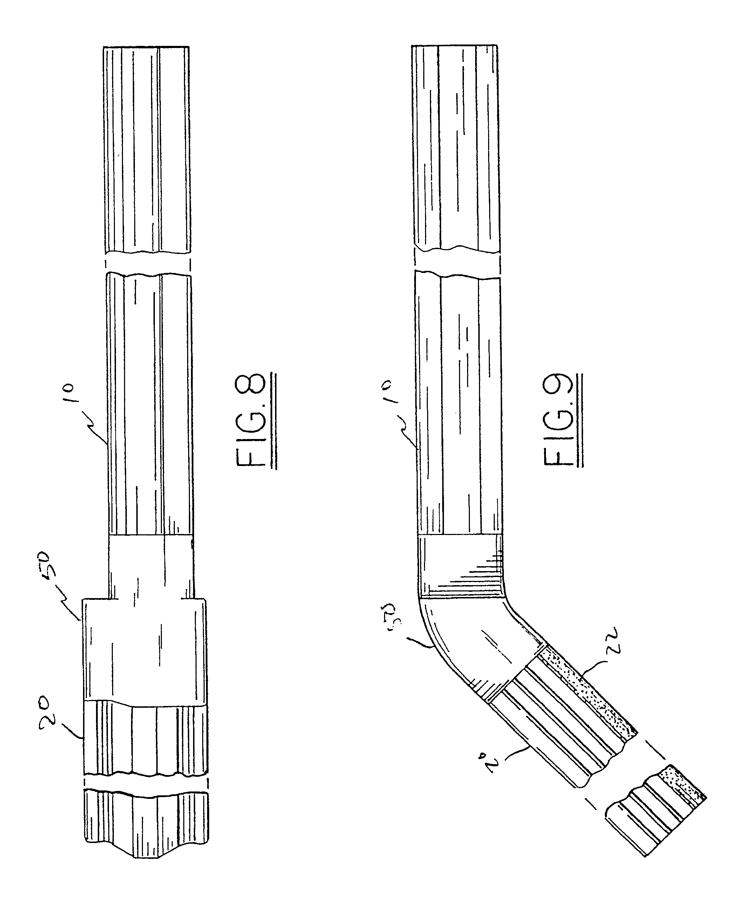

Completed segments of door frame weatherseal elements formed in accordance with this invention are illustrated at Figures 8 and 9, Figure 8 being a top plan view of a weatherseal, and Figure 9 a front elevation thereof. As can be seen, a continuous assembly is formed comprising weatherseal 20, corner 50, and weatherseal 10. The flocking on weatherseal 20 is substantially undisturbed by the cold molding process, and a weatherseal that overcomes the disadvantages of the prior art has been produced in a commercially practical process. In like manner, slip coatings are undisturbed by this process.

While the invention has been described in connection with a number of presently preferred embodiments thereof, those skilled in the art will recognize that many modifications and changes may be made therein without departing from the scope of the invention, which accordingly is intended to be defined solely by the appended claims.

## Claims

1. A method of bonding plastic to rubber at low temperature comprising contacting an activated surface of a vulcanized structure comprising EPDM rubber wits a plastic comprising a mixture of between 70% and 90% of thermoplastic olefin and between 10% and 30% of polyethylene at a temperature above the softening, point of the plastic and below the softening point of the EPDM rubber structure to form a flexible solid butt joint in the absence of an adhesive interlayer.

2. The method of claim 1 in which said activated surface comprises a surface cut from an elongated extruded vulcanized structure, no more than 72 hours prior to said contacting step.

3. The method of claim 1 in which said activated surface is formed by reactivating a previously activated and subsequently deactivated surface.

4. The method of claim 1, 2 or 3 in which said contacting step comprises inserting activated ends of first and second extruded EPDM weatherstrip elements into a corner mold, and filling said mold wits the plastic, to form a corner element connecting the extruded elements.

5. The method of claim 4 in which the extruded EPDM elements are elongated weatherstrip elements.

6. The method of any one of claims 1-5 in which the thermoplastic olefin comprises polyolefin hydrocarbon, and the polyethylene comprises linear low density polyethylene.

7. A moldable plastic for forming a bond with an activitated surface of a vulcanized EPDM stucture in the absence of an adhesive interlayer and at a temperature below the softening point of the EPDM structure comprising:
   a mixture of between about 70% and 90% of thermoplastic olefin and between about 10% and 30% of polyethylene.

8. The moldable plastic of claim 7 in which the thermoplastic olefin comprises polyolefin hydrocarbon, and the polyethylene comprises linear low density polyethylene.

9. A bonded composite of a vulcanized EPDM rubber structure with a molded plastic structure, the plastic structure comprising a mixture of between 70% and 90% of thermoplastic olefin and between 10% and 30% of polyethylene in the absence of an adhesive interlayer.

10. The bonded composite of claim 10 in which the thermoplastic olefin comprises polyolefin hydrocarbon, and the polyethylene comprises linear low density polyethylene.

FIG.1

FIG.2

FIG.3

FIG.4

FIG.5

EP 0 461 887 A1

EP 0 461 887 A1

20

34

10

$$\underline{FIG.6}$$

30

40

40

34

20

20

$$\underline{FIG.7}$$

FIG.8

FIG.9

European Patent
Office

# EUROPEAN SEARCH REPORT

Application Number

EP 91 30 5322

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 360 475 (BRIDGESTONE AUSTRALIA LTD)<br>* Page 2, lines 1-5; page 2, lines 45-53; page 3, lines 3-26; page 3, line 57; figure 1; claims 1,11 *<br>--- | 1,4-10 | C 08 J 5/12 |
| A | EP-A-0 116 747 (DUNLOP LTD)<br>* Page 1, lines 1-5; page 3, lines 4-34; page 4, lines 11-16; example 3; claims 1,2,5,6,9 * & US-A-4 537 825 (Cat. D)<br>--- | 1,4-10 | |
| A | US-A-4 300 970 (T. HONDA)<br>* Abstract *<br>--- | 1-3 | |
| A | DE-A-1 944 332 (KUROKAWA et al.)<br>* Page 2, lines 14-21 *<br>--- | 1-3 | |
| A | EP-A-0 253 793 (MONSANTO EUROPE S.A.)<br>* Abstract; claims 1-11,15 *<br>----- | 1-3 | |
| | | | **TECHNICAL FIELDS SEARCHED (Int. Cl.5)**<br><br>C 08 J<br>B 29 C<br>B 60 J |

The present search report has been drawn up for all claims

| Place of search | Date of completion of the search | Examiner |
|---|---|---|
| THE HAGUE | 25-09-1991 | GOERKE H.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                  
& : member of the same patent family, corresponding document

EPO FORM 1503 03.82 (P0401)